**Europäisches Patentamt**

**European Patent Office**

**Office européen des brevets**

(11) Veröffentlichungsnummer: **0 069 698**
**A2**

(12) **EUROPÄISCHE PATENTANMELDUNG**

(21) Anmeldenummer: **82730093.0**

(22) Anmeldetag: **02.07.82**

(51) Int. Cl.³: **E 04 B 1/78**
**B 32 B 21/08**

(30) Priorität: **04.07.81 DE 8119591 U**

(43) Veröffentlichungstag der Anmeldung:
**12.01.83 Patentblatt 83/2**

(84) Benannte Vertragsstaaten:
**AT BE CH DE FR LI NL**

(71) Anmelder: **Bock, Klaus-Peter**
**Zeisigbusch 9**
**3250 Hameln 1(DE)**

(72) Erfinder: **Bock, Klaus-Peter**
**Zeisigbusch 9**
**3250 Hameln 1(DE)**

(74) Vertreter: **Eikenberg & Brümmerstedt Patentanwälte**
**Schackstrasse 1**
**D-3000 Hannover 1(DE)**

(54) **Wärmedämmende Platte.**

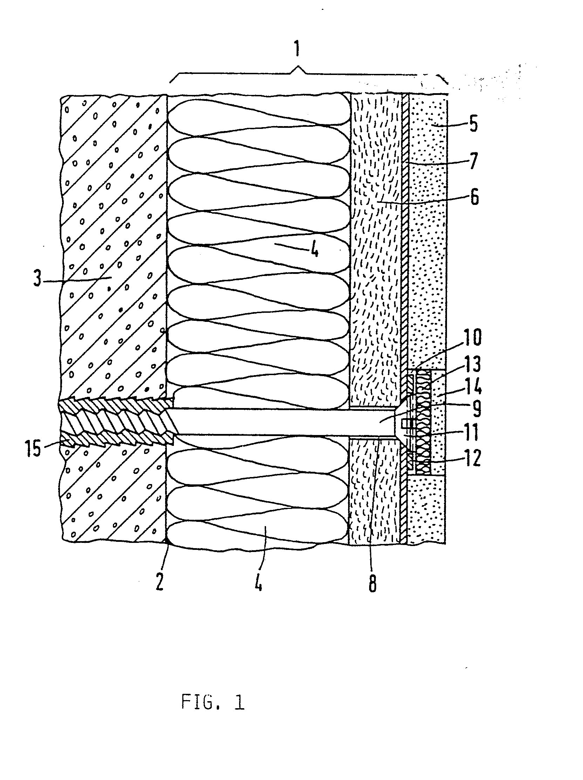

(57) Es wird eine aus mehreren Schichten zusammengesetzte wärmedämmende Platte zur Anbringung auf der Innenseite von Gebäudewänden beschrieben, wobei die nach der Montage der Gebäudewand zugekehrte rückseitige Schicht der Platte aus einem Isolierstoff und die vorderseitige Schicht aus einem festen Material mit geschlossener Oberfläche besteht. Zwischen den beiden Schichten ist eine Holz- oder Spanplatte angeordnet, so daß die wärmedämmende Platte unmittelbar mit der Wand verschraubt werden kann und auch die Möglichkeit geboten wird, an der wärmedämmenden Platte schwerere Gegenstände anzubringen (Fig. 1).

FIG. 1

EP 0 069 698 A2

Wärmedämmende Platte

Es sind wärmedämmende Platten bekannt, die aus mehreren Schichten zusammengesetzt sind und zur Anbringung auf der Innenseite von Gebäudewänden dienen, um nachträglich den Wärmeschutz zu verbessern. Dabei sind zwei Schichten vorgesehen, und zwar eine rückseitige Schicht aus Isolierstoff, z.B. aus Kunststoff-Hartschaum, die nach der Montage der Gebäudewand zugekehrt ist, und eine vorderseitige Schicht aus einer Gipskartonplatte. Die beiden Schichten sind dabei miteinander verklebt, so daß die Platte als Einheit an der Wand befestigt werden kann.

Die Befestigung solcher Platten an der Wand erfolgt dabei in der Regel mittels eines Ansetzbinders, da eine Verschraubung wegen des mangelnden Widerstandes der Gipskartonplatte gegen Druckkräfte nicht möglich ist, zumal der Schraubenkopf versenkt werden muß, damit die ebene Außenfläche der Gipskartonplatte erhalten bleibt. Der Ansetzbinder ist in der Verarbeitung schwierig, weil die Parallelität der Dämmplatte zur Wand nur schwer herstellbar ist und weil der Ansetzbinder ein mit Wasser angerührtes Gemisch darstellt, so daß im Hinblick darauf, daß solche Dämmplatten häufig erst angebracht werden, wenn der Raum bereits bewohnt ist, sehr leicht die Gefahr von Verschmutzungen, z.B. eines Teppichbodens, besteht. Ein wesentlicher Nachteil solcher Dämmplatten besteht aber darin, daß sie keine ausreichende Tragfähigkeit zum Anbringen schwererer Gegenstände, wie z.B. Regalen, besitzen.

Der Erfindung liegt die Aufgabe zugrunde, eine aus mehreren Schichten zusammengesetzte wärmedämmende Platte zu schaffen, die sich leicht anbringen läßt, die genügend Tragfähigkeit für außen an ihr angebrachte Gegenstände besitzt, und die außerdem eine hervorragende Dämmeigenschaft besitzt.

Die gestellte Aufgabe wird gemäß der Erfindung dadurch gelöst, daß zwischen den beiden Schichten eine Holz- oder Spanplatte angeordnet ist.

Die Anordnung der Spanplatte hat den Vorteil, daß die wärmedämmende Platte unmittelbar mit der Wand verschraubt werden kann, weil die hierfür erforderlichen Druckkräfte von der Spanplatte aufgenommen werden können. Andererseits bietet die Spanplatte aber auch die Möglichkeit, an der wärmedämmenden Platte Gegenstände anzubringen. Außerdem wirkt die Spanplatte zusätzlich als Wärmespeicher, so daß damit die wärmedämmenden Eigenschaften zusätzlich verbessert werden.

Um zu verhindern, daß Raumfeuchtigkeit durch die vorderseitige Schicht in die Spanplatte gelangt, wird vorzugsweise zwischen der Holz- oder Spanplatte und der vorderseitigen Schicht eine wasserundurchlässige Folie als Dampfsperre angeordnet.

Vorzugsweise besteht die Isolierstoffschicht aus Kunststoff-Hartschaum, wobei die Holz- oder Spanplatte mit der Kunststoff-Hartschaumschicht verklebt wird.

Die Einfügung der Holz- oder Spanplatte hat aber noch den weiteren Vorteil, daß für die Isolierstoffschicht ein in sich weicheres feuerhemmendes Material, z.B. Glas- oder Mineralwolle verwendet werden kann, die auf an der Rückseite der Holz- oder Spanplatte befestigte Abstandshalter aufgesteckt wird, deren Länge etwa gleich der Dicke der Glas- oder Mineralwollschicht ist.

Die vorderseitige Schicht besteht vorzugsweise aus einer Gipskartonplatte oder aus einer Holzplatte, wobei die vorderseitige Schicht mit der Holz- oder Spanplatte nach Einfügung der wasserundurchlässigen Folie mittels Heftklammern verbunden wird.

Zur Befestigung werden vorzugsweise in der Platte nach einem Raster Löcher zur Aufnahme von Befestigungsschrauben angeordnet, wobei die Löcher in der vorderseitigen Schicht einen vergrößerten Durchmesser aufweisen, so daß der Schraubenkopf versenkt ist und sich unmittelbar auf der Holz- bzw. Spanplatte abstützen kann. Hierdurch bietet sich die Möglichkeit, auf die Köpfe der Befestigungsschrauben wärmedämmende Plättchen aufzulegen, um die dem Innenraum zugekehrte Oberfläche von den Befestigungsschrauben zu isolieren.

Die Erfindung wird nachfolgend anhand von in der Zeichnung dargestellten Ausführungsbeispielen näher erläutert. In der Zeichnung zeigen:

Fig. 1          einen Querschnitt durch einen Teil einer gemäß der Erfindung ausgebildeten Platte,

Fig. 2          eine gegenüber Fig. 1 abgewandelte Ausführungsform und

Fig. 3          einen Schnitt entlang der Linie A-A in Fig. 2.

In Fig. 1 ist ein Teil der Platte 1 dargestellt, die mit der Innenfläche 2 eines vorhandenen Mauerwerks verbunden ist. Die wärmedämmende Platte 1 besteht aus einer rückseitigen Schicht 4 aus Kunststoff-Hartschaum, z.B. Polystyrol-Hartschaum, die im montierten Zustand dem Mauerwerk 3 zugekehrt ist. Auf diese Polystyrol-Hartschaumschicht ist eine Spanplatte 6 aufgeklebt, an der wiederum mittels Heftklammern unter Zwischenfügung einer Dampfsperre in Form einer Folie 7 aus Kunststoff oder Aluminium die vorderseitige Schicht 5 befestigt ist, wobei die Schicht 5 vorzugsweise aus einer Gipskartonplatte besteht. Statt dessen kann aber auch eine Holzplatte verwendet werden.

In der Platte 1 werden bereits bei der Herstellung in einem vorgegebenen Raster Löcher 8 angebracht, in die bei der Montage Schrauben 9 eingeführt und in im Mauerwerk 3 angebrachte Dübel 15 eingeschraubt werden. In der vorderseitigen Schicht 5 sind die Löcher 8 mit einem größeren Durchmesser 10 versehen, so daß der Kopf 11 der Schraube 9 in der Schicht 5 versenkt ist und sich unmittelbar über eine Unterlegscheibe 12 auf der Spanplatte 6 abstützen kann. Ein Wärmedämmplättchen 13 kann entweder mit der Schraube verbunden sein oder nachträglich nach Eindrehen der Schraube 9 in den zuvor im Mauerwerk 3 angebrachten Dübel 15 in das Loch 10 eingesteckt werden, worauf das Loch 10 mit Spachtelmasse 14 bündig verschlossen wird.

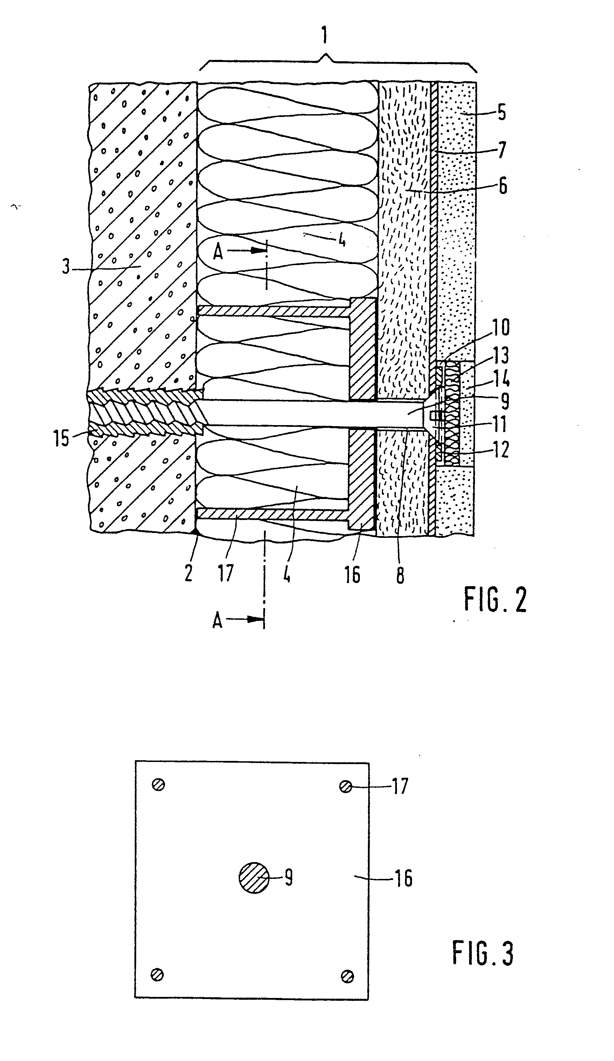

Bei dem Ausführungsbeispiel gemäß Fig. 2, in dem für gleiche Teile gleiche Bezugsziffern wie in Fig. 1 verwendet werden, besteht die Isolierstoffschicht 4 aus Mineralwolle. Zur Halterung der Schicht 4 dienen Abstandshalter 16, die an der Spanplatte 6 befestigt sind und zugleich dafür sorgen, daß die wärmedämmende Platte nach der Montage überall exakt parallel zum Mauerwerk 3 verläuft. Die Abstandshalter 15 bestehen aus Basisplatten, an denen - wie aus Fig. 3 ersichtlich ist - vier Vorsprünge aufragen, wobei die Länge der Vorsprünge 17 und die Dicke der Basisplatte etwa der Dicke der Mineralwollschicht 4 entsprechen. Die Basisplatten der Abstandshalter 16 besitzen jeweils ein zentrales Loch, wobei die Befestigung an der Spanplatte 6 so erfolgt, daß die Löcher der Abstandshalter mit den Löchern 8 für die Befestigungsschrauben fluchten.

Dadurch, daß die wärmedämmende Platte mit dem Mauerwerk verschraubt werden kann, ist die Anbringung einfach und auch von einem Laien durchführbar. Nach dem Anbringen wird dann in bekannter Weise die Außenfläche der Gipskartonplatte 5 verspachtelt, so daß darauf dann eine Tapete oder ein Anstrich angebracht werden kann.

Bei einer praktischen Ausführungsform der erfindungsgemäßen wärmedämmenden Platte beträgt die Dicke der Isolierstoffschicht 4 etwa 4 - 8 cm, die Dicke der Spanplatte 6 etwa 1,2 cm
und die Dicke der Gipskartonplatte 5 etwa 1 cm. Messungen haben
ergeben, daß mit einer solchen Platte der Wärmedurchgangswert,
der sogenannte K-Wert, 0,685 beträgt und damit eine hervorragende
Warmedämmung gewährleistet ist.

Klaus-Peter Bock                                    505/1 EU

           P a t e n t a n s p r ü c h e
           ------------------------------------

1.      Aus mehreren Schichten zusammengesetzte wärmedämmende
Platte zur Anbringung auf der Innenseite von Gebäudewänden, wobei
die nach der Montage der Gebäudewand zugekehrte rückseitige
Schicht der Platte aus einem Isolierstoff und die vorderseitige
Schicht aus einem festen Material mit geschlossener Oberfläche
besteht, dadurch gekennzeichnet, daß zwischen den beiden Schichten (4, 5) eine Holz- oder Spanplatte (6) angeordnet ist.

2.      Wärmedämmende Platte nach Anspruch 1, dadurch gekennzeichnet, daß zwischen der Holz- oder Spanplatte (6) und der
vorderseitigen Schicht (5) eine wasserundurchlässige Folie (7)
angeordnet ist.

3.      Wärmedämmende Platte nach Anspruch 2, dadurch gekennzeichnet, daß die Isolierstoffschicht (4) aus Kunststoffhartschaum besteht und die Holz- oder Spanplatte (6) mit der Kunststoff-Hartschaumschicht verklebt ist.

4.      Wärmedämmende Platte nach Anspruch 2, dadurch gekennzeichnet, daß die Isolierstoffschicht (4) aus Glas- oder Mineralwolle besteht, die auf an der Rückseite der Holz- oder Spanplatte (6) befestigte Abstandshalter (16) aufgesteckt ist, deren
Länge etwa gleich der Dicke der Glas- oder Mineralwollschicht (4)
ist.

0069698

5. Wärmedämmende Platte nach Anspruch 3 oder 4, dadurch gekennzeichnet, daß die vorderseitige Schicht (5) mit der Holz- oder Spanplatte (6) mittels Heftklammern verbunden ist.

6. Wärmedämmende Platte nach Anspruch 5, dadurch gekennzeichnet, daß die vorderseitige Schicht (5) aus einer Gipskartonplatte besteht.

7. Wärmedämmende Platte nach Anspruch 5, dadurch gekennzeichnet, daß die vorderseitige Schicht (5) aus einer Holzplatte besteht.

8. Wärmedämmende Platte nach Anspruch 6 oder 7, dadurch gekennzeichnet, daß in der Platte (1) in einem Raster Löcher (8) zur Aufnahme von Befestigungsschrauben (9) angeordnet sind.

9. Wärmedämmende Platte nach Anspruch 8, dadurch gekennzeichnet, daß die Löcher in der vorderseitigen Schicht (5) einen vergrößerten Durchmesser (10) aufweisen.

10. Wärmedämmende Platte nach Anspruch 9, dadurch gekennzeichnet, daß auf den in der vorderseitigen Schicht (5) versenkten Köpfen (11) der Befestigungsschrauben (9) wärmedämmende Plättchen angebracht sind.

11. Wärmedämmende Platte nach Anspruch 4, dadurch gekennzeichnet, daß die Abstandshalter (16) aus einer Basisplatte und davon aufragenden Vorsprüngen (17) bestehen, wobei die Basisplatten jeweils mit der Holz- oder Spanplatte (6) verklebt oder geheftet sind und ein zentrales Loch in den Basisplatten jeweils eine der Befestigungsschrauben (9) umgibt.

12. Wärmedämmende Platte nach einem der vorhergehenden Ansprüche, dadurch gekennzeichnet, daß die Isolierstoffschicht (4) eine Dicke von etwa 4 - 8 cm, die Holz- oder Spanplatte (6) eine Dicke von etwa 1,2 cm und die vorderseitige Schicht (5) eine Dicke von etwa 1 cm aufweist.

FIG. 1

FIG. 2

FIG.3